# EUROPÄISCHE PATENTSCHRIFT

(11) **EP 4 098 419 B1**
(45) Veröffentlichungstag und Bekanntmachung des Hinweises auf die Patenterteilung: **20.08.2025**
(21) Anmeldenummer: 21176990.6
(22) Anmeldetag: 31.05.2021
(51) Int. Cl.: B29C 35/08, B29C 33/06, H05B 6/10, H05B 6/14

(54) **INDUKTIONSBEHEIZTES WERKZEUGSYSTEM ZUM AUSHÄRTEN VON KUNSTSTOFFFASERBAUTEILEN**
INDUCTION HEATED TOOL SYSTEM FOR CURING PLASTIC FIBRE COMPONENTS
SYSTÈME D'OUTIL CHAUFFÉ PAR INDUCTION DESTINÉ AU DURCISSEMENT DES COMPOSANTS EN FIBRE PLASTIQUE

(43) Veröffentlichungstag der Anmeldung: 07.12.2022
(73) Patentinhaber: Airbus Operations GmbH, 21129 Hamburg (DE)
(72) Erfinder: Schubert, Konstantin, 21129 Hamburg (DE); Kerger, Sebastian, 21129 Hamburg (DE); Looks, Jan, 21129 Hamburg (DE); Fideu, Paulin, 21129 Hamburg (DE)
(74) Vertreter: Bird & Bird LLP - Hamburg

(56) Entgegenhaltungen:
- US-A1- 2005 035 115
- US-A1- 2017 095 986
- US-A1- 2019 380 174

## Beschreibung

Die vorliegende Erfindung betrifft ein induktionsbeheiztes Werkzeugsystem zur Aufnahme und zum Aufheizen von Kunststofffaserbauteilen von einer Ausgangstemperatur auf eine Zieltemperatur mit wenigstens einem Werkzeugteil, das aus einem thermisch formstabilen Material gebildet ist.

Aus dem Stand der Technik sind Werkzeugsysteme bekannt, mit denen Kunststofffaserbauteile ausgehärtet werden können, die als Matrixmaterial einen Kunststoff aufweisen, der zum Aushärten auf Temperaturen im Bereich von 140-180 °C und in Ausnahmefällen auch bis zu 400 °C erwärmt werden muss. Dazu weisen derartige Werkzeugsysteme Werkzeugteile auf, die Aussparungen aufweisen, in denen das aufzuheizende Kunststofffaserbauteil aufgenommen werden kann, sodass es dort an Anlageflächen der Werkzeugteile anliegt.

Insbesondere im Bereich der Luftfahrttechnik hat sich dabei das Problem ergeben, dass die dort verwendeten Kunststofffaserbauteile beim Aushärten zum einen sehr gleichmäßig, d.h. mit nur sehr geringen Temperaturgradienten über das Bauteil hinweg gesehen, aufgeheizt werden müssen, um eine für Luftfahrtanforderungen hinreichende Qualität sicherzustellen. Es ist dabei erforderlich, dass die Temperaturdifferenzen, die an der Anlagefläche der Werkzeugteile herrschen, sehr gering sind und das jeweilige Werkzeugteil und insbesondere dessen Anlagefläche sehr gleichmäßig aufgeheizt wird.

Zum anderen ist es ein weiteres Erfordernis, dass die Werkzeugteile, in denen die Aussparungen zur Aufnahme des Kunststofffaserbauteils ausgebildet sind, sich während des Aufheizens zum Aushärten nur in einem an das Bauteil angepassten Maße thermisch ausdehnen bzw. sich bei dem anschließenden Abkühlvorgang nur in der entsprechenden Weise wieder zusammenziehen, um sicherzustellen, dass auf das ausgehärtete Bauteil während des Abkühlprozesses kein großer Druck ausgeübt wird, was zu einer Beschädigung des Kunststofffaserbauteils führen könnte.

Schließlich ist es wünschenswert, dass die verwendeten Werkzeugteile ein vergleichsweise geringes Gewicht aufweisen und damit einfach zu handhaben sind. Dies ist insbesondere bei den im Luftfahrtbereich hergestellten großen Bauteilen von besonderer Bedeutung. Um dieses Ziel zu erreichen, hat es sich als vorteilhaft erwiesen, die Werkzeugteile nicht mithilfe eines Heizmediums wie beispielsweise Öl oder dergleichen, das durch Leitungen innerhalb der Werkzeugteile geführt wird, aufzuheizen, sondern stattdessen Induktoren zu verwenden und die Werkzeugteile induktiv durch Induzieren von Wirbelströmen auf die gewünschten Temperaturen zu bringen.

Um bei dieser Technik zu verhindern, dass einzelne Bereiche der Werkzeugteile und insbesondere deren Anlageflächen, mit denen die Werkzeugteile zur Anlage mit dem auszuhärtenden Kunststofffaserbauteil kommen, auf zu hohe Temperaturen gebracht werden, ist es zudem aus dem Stand der Technik, wie beispielsweise der US 2005/035115 A1, bekannt, als Material, das mit den Kunststofffaserbauteilen zur Anlage kommt und insbesondere die Anlagefläche bildet, ein ferromagnetisches Material zu verwenden, das eine Curie-Temperatur hat, die im Wesentlichen der Temperatur entspricht, auf die das Kunststofffaserbauteil aufgeheizt werden muss. Da ein derartiges ferromagnetisches Material damit etwa bei der Temperatur, auf die das Kunststofffaserbauteil aufgeheizt werden soll, seine ferromagnetischen Eigenschaften verliert und in wesentlich geringerem Maße durch einen Induktor eingestrahlte elektrische Energie aufnimmt, wird erreicht, dass bei derartig aufgebauten Werkzeugteilen die Anlageflächen nicht über die Temperatur hinaus aufgeheizt werden, bis zu der das Kunststofffaserbauteil aufgeheizt werden soll. Ein Werkzeugteil, dessen Anlageflächen aus einem ferromagnetischen Material mit einer Curie-Temperatur entsprechend der Aushärtetemperatur für das Kunststoffbauteil aufgebaut ist, sind damit in gewisser Weise selbst regulierend, in dem sie verhindern, dass sie sich trotz weiter eingestrahlter elektromagnetischer Energie auf zu hohe Temperaturen aufheizen.

Allerdings hat sich herausgestellt, dass sich für Werkzeugteile, die aus einem ferromagnetischen Material mit einer bestimmten Curie-Temperatur gebildet sind, die Temperaturausdehnungskoeffizienten und insbesondere Längenausdehnungskoeffizienten in der Nähe der Curie-Temperatur stark erhöhen. Dies führt dazu, dass sich derartige Werkzeugteile, deren Curie-Temperatur entsprechend der Aushärtetemperatur gewählt ist, nahe eben dieser Temperatur stark ausdehnen und umgekehrt beim Abkühlen dann auch wieder stark zusammenziehen, was aus den eingangs genannten Gründen außerordentlich nachteilhaft ist.

Ausgehend vom Stand der Technik ist es daher die Aufgabe der vorliegenden Erfindung, ein induktionsbeheiztes Werkzeugsystem zur Aufnahme und zum Aufheizen von Kunststofffaserbauteilen bereitzustellen, bei dem verhindert wird, dass sich die Anlagefläche der Aussparung zur Aufnahme eines Kunststofffaserbauteils ungleichmäßig und auf zu hohe Temperaturen aufheizt und das zudem im Bereich der Aussparung thermisch formstabil ist.

Erfindungsgemäß wird diese Aufgabe gelöst durch ein induktionsbeheiztes Werkzeugsystem zur Aufnahme und zum Aufheizen von Kunststofffaserbauteilen von einer Ausgangstemperatur auf eine Zieltemperatur, mit wenigstens einem Werkzeugteil, wobei in dem Werkzeugteil wenigstens eine Aufnahmeaussparung zur Aufnahme eines Kunststofffaserbauteils ausgebildet ist, wobei die Aufnahmeaussparung von einem Aufnahmeoberflächenabschnitt des Werkzeugteils begrenzt ist, sodass ein in der Aufnahmeaussparung aufgenommenes Kunststofffaserbauteil an dem Aufnahmeoberflächenabschnitt anliegen kann. Das Werkzeugteil ist aus einem thermisch formstabilen Material gebildet ist, sodass das Werkzeugteil bei Temperaturen in dem Bereich zwischen der Ausgangstemperatur und der Zieltemperatur in der Ebene der größten Abmessung der Aufnahmeaussparung, vorzugsweise in allen Erstreckungsrichtungen der Aufnahmeaussparung, einen thermischen Längenausdehnungskoeffizienten hat, der kleiner als 1ox10⁻⁶ K⁻¹, vorzugsweise kleiner als 5x10⁻⁶ K⁻¹ und weiter bevorzugt kleiner als 4x10⁻⁶ K⁻¹ ist.

Ferner weist das erfindungsgemäße Werkzeugsystem wenigstens ein Suszeptorelement auf, das ein ferromagnetisches Material aufweist, das eine erste Curie-Temperatur aufweist, die der Zieltemperatur entspricht, wobei das Suszeptorelement an einem Oberflächenabschnitt des Werkzeugteils angeordnet ist, der außerhalb der Aufnahmeaussparung und des Aufnahmeoberflächenabschnitts liegt.

Schließlich ist wenigstens eine Induktionseinrichtung vorgesehen, die ausgebildet ist, ein magnetisches Wechselfeld zumindest in dem Bereich zu erzeugen, in dem das wenigstens eine Suszeptorelement angeordnet ist.

Ein erfindungsgemäßes Werkzeugsystem weist demnach zumindest ein Werkzeugteil auf, in dem eine Aussparung ausgebildet ist, die von einem Aufnahmeoberflächenabschnitt des Werkzeugteils begrenzt ist, sodass ein auszuhärtendes Kunststofffaserbauteil in der Aussparung derart aufgenommen werden kann, dass es an dem Aufnahmeoberflächenabschnitt anliegt. Das Material des Werkzeugteils ist dabei derart gewählt, dass das Werkzeugteil bei Temperaturen in dem Bereich zwischen der Ausgangstemperatur und der Zieltemperatur jedenfalls in der Ebene der größten Abmessung der Aufnahmeaussparung einen thermischen Längenausdehnungskoeffizienten hat, der kleiner als 1ox10⁻⁶ K⁻¹, vorzugsweise kleiner als 5x10⁻⁶ K⁻¹ und weiter bevorzugt kleiner als 4x10⁻⁶ K⁻¹ ist. Vorzugsweise gilt diese Anforderung an die Längenausdehnungskoeffizienten für alle Erstreckungsrichtungen der Aufnahmeaussparung. Das bedeutet, dass als Material des Werkzeugteils beliebige Materialien verwendet werden können, sofern sie die zuvor genannte Bedingung im Hinblick auf den Ausdehnungskoeffizienten erfüllen, also in dem Bereich, in dem das Werkzeugteil während des Aushärteprozesses geheizt wird, sich nur gering verformt.

Ferner ist erfindungsgemäß wenigstens ein Suszeptorelement vorgesehen, das außerhalb der Aufnahmeaussparung und beabstandet zu dem Aufnahmeoberflächenabschnitt an dem Werkzeugteil angeordnet ist, d.h. an diesem anliegt und einen möglichst guten thermischen Kontakt zu dem Werkzeugteil hat. Dabei ist das Suszeptorelement aus einem ferromagnetischen Material gebildet und weist eine Curie-Temperatur auf, die der Zieltemperatur entspricht, auf die das Kunststofffaserbauteil, das in der Aufnahmeaussparung aufgenommen werden soll, aufgeheizt werden soll.

Schließlich ist eine Induktionseinrichtung vorgesehen, die ausgebildet ist, ein magnetisches Wechselfeld in dem Bereich zu erzeugen, in dem das Suszeptorelement angeordnet ist.

Das erfindungsgemäße Werkzeugsystem arbeitet damit in der Weise, dass mithilfe der Induktionseinrichtung das Suszeptorelement aufgeheizt wird, das dann wiederum die thermische Energie an das Werkzeugteil mit der Aufnahmeaussparung überträgt. Dadurch, dass das Werkzeugteil mit der darin vorgesehenen Aufnahmeaussparung aus einem thermisch formstabilen Material gebildet ist, kann es nicht dazu kommen, dass das in der Aufnahmeaussparung vorgesehene Kunststofffaserbauteil beim Aufheizen oder beim Abkühlen Druckkräften ausgesetzt ist und es Schaden nehmen kann. Darüber hinaus verhindert das Suszeptorelement mit der erfindungsgemäß gewählten Curie-Temperatur, dass die Suszeptorelemente über eine Temperatur hinaus aufgeheizt werden, die der Zieltemperatur für das Kunststofffaserbauteil entspricht, das ausgehärtet werden soll. Daraus ergibt sich wiederum das auch das Werkzeugteil selbst nicht über diese Temperatur aufgeheizt wird. Das System ist damit auch wieder selbst regulierend.

Weiterhin ermöglicht das erfindungsgemäße System, dass die Suszeptorelemente in geeigneter Weise an der Oberfläche des Werkzeugteile außerhalb des Aufnahmeoberflächenabschnitts so angeordnet werden können, dass gerade die Bereiche des Werkzeugteils durch den Kontakt mit den Suszeptorelementen besonders aufgeheizt werden, die in großem Maße thermische Energie wieder an das Kunststofffaserbauteil oder die Umgebung abgeben und ohne zusätzliche Suszeptorelemente nicht die gewünschte Temperatur erreichen würden. Die erfindungsgemäß an der Oberfläche des Werkzeugteils angeordneten Suszeptorelemente ermöglichen somit, den Wärmeenergieeintrag in das Werkzeugteile räumlich zu steuern, in dem Suszeptorelemente an den erforderlichen Bereichen angebracht werden.

In einer bevorzugten Ausführungsform ist das wenigstens eine Werkzeugteil aus einem metallischen paramagnetischen Material gebildet. Derartige Materialien weisen eine gute Wärmeleitfähigkeit auf, was vorteilhaft ist. Hierbei kann es sich insbesondere um einen Invar-Werkstoff und besonders um Invar 36 handeln. Darüber hinaus nehmen sie in moderatem Umfang Energie durch das von der Induktionseinrichtung erzeugte magnetische Wechselfeld auf.

Alternativ ist es auch möglich, dass das Werkzeugteil aus einem metallischen ferromagnetischen Material gebildet ist, wobei dessen Curie-Temperatur oberhalb der Zieltemperatur liegt. Durch die Wahl eines solchen Materials für das Werkzeugteil wird sichergestellt, dass es in dem gewünschten Temperaturbereich zwischen der Ausgangstemperatur und der Zieltemperatur thermisch formstabil ist, wobei es dennoch eine gute thermische Leitfähigkeit aufweist.

In einer weiteren bevorzugten Ausführungsform weist das wenigstens eine Suszeptorelement neben dem einen ferromagnetischen Material ein weiteres ferromagnetisches Material auf, dass eine zweite Curie-Temperatur aufweist, die unterhalb der ersten Curie-Temperatur liegt. Bei einer derartigen Ausführungsform ist das wenigstens eine Suszeptorelement aus mehreren ferromagnetischen Materialien zusammengesetzt, die unterschiedliche Curie-Temperaturen haben. Dadurch wird erreicht, dass zunächst bei Temperaturen unterhalb der ersten Curie-Temperatur das Suszeptorelement in großem Maße Energie aus dem eingestrahlten elektromagnetischen Wechselfeld aufnimmt, was zu einem schnellen Aufheizen des Werkzeugteils führt. Ist dessen Temperatur und damit auch die des Suszeptorelements über die zweite Curie-Temperatur angestiegen, wird weniger Energie von dem Suszeptorelement absorbiert und der Temperaturanstieg in dem Werkzeugteil fällt geringer aus. Ist schließlich die erste Curie-Temperatur erreicht, wird de facto keine Energie mehr absorbiert, und die Heizwirkung aufgrund des Suszeptorelements unterbleibt. Somit ermöglicht das Vorsehen eines zweiten ferromagnetischen Materials, den Anstieg der Temperatur in dem Werkzeugteile weiter zu steuern.

Um einen guten Wärmeübertrag in das Werkzeugteil zu gewährleisten, ist es weiter bevorzugt, wenn das wenigstens eine Suszeptorelement ein Material mit hoher thermischer Leitfähigkeit, vorzugsweise Kupfer, aufweist.

Insbesondere ist es bevorzugt, wenn das wenigstens eine Suszeptorelement aus Partikeln aus ferromagnetischem Material und aus einem Matrix-Material gebildet ist. Bei dieser Ausführungsform kann die Form des Suszeptorelements in einfacher Weise an die Gegebenheiten des Bereichs der Oberfläche angepasst werden, in dem das Suszeptorelement angebracht werden soll. In weiter bevorzugter Weise handelt es sich bei dem Matrix-Material um ein thermoplastisches Material, dessen Schmelztemperatur oberhalb der ersten Curie-Temperatur liegt. Bei einer derartigen Wahl des thermoplastischen Materials ist sichergestellt, dass das Suszeptorelement während des normalen Betriebsbereichs des Werkzeugsystems nicht seine Form verliert. Auf der anderen Seite können derartige Suszeptorelemente aber einfach hergestellt werden, da thermoplastisches Material leicht zu bearbeiten ist.

In einer weiteren bevorzugten Ausführungsform weist das wenigstens eine Werkzeugteil einen Hauptabschnitt auf, in dem die Aufnahmeaussparung ausgebildet ist, wobei Rippenelemente vorgesehen sind, die sich von einem Oberflächenabschnitt des Hauptabschnitts weg erstrecken, der außerhalb der Aufnahmeaussparung und des Aufnahmeoberflächenabschnitts liegt, wobei zwischen den Rippenelementen wenigstens ein Freiraum ausgebildet ist, in dem die Induktionseinrichtung angeordnet ist, und wobei an dem den Freiraum begrenzenden Abschnitt der Oberfläche des Hauptabschnitts das wenigstens eine Suszeptorelement befestigt ist. Bei dieser Ausführungsform sorgen die Rippenelemente, die an dem Hauptabschnitt angebracht sind, dafür, dass sich der Hauptabschnitt nicht verformen kann, was wiederum ermöglicht, die Wandstärke des Hauptabschnittes geringer zu wählen, sodass die Masse des Werkzeugteils vergleichsweise gering ausfällt. Darüber hinaus ergibt sich aus der geringeren Wandstärke des Hauptabschnitts, dass dieser schneller auf Änderungen der Temperatur des Suszeptorelements reagiert, sodass Temperaturänderungen des Werkzeugteils auch schneller bewirkt werden können. Schließlich dienen die Rippenelemente dazu, eine Standfläche sowie eine Anlagefläche für eine Presse zu bilden, über die das Werkzeugteil während des Aushärteprozesses zugehalten wird

In einer weiter bevorzugten Ausführungsform ist neben dem ersten Suszeptorelement noch ein weiteres Suszeptorelement vorgesehen, das ebenfalls eine erste Curie-Temperatur aufweist, die der Zieltemperatur entspricht, wobei das weitere Suszeptorelement an einer zu dem Freiraum weisenden Oberfläche eines der Rippenelemente vorgesehen ist. Bei einer derartigen Ausführungsform sind in dem Freiraum ein erstes Suszeptorelement und ein weiteres Suszeptorelement vorgesehen, sodass nicht nur der Hauptabschnitt unmittelbar durch ein Suszeptorelement aufgeheizt werden kann, sondern auch das Rippenelement, an dem das wenigstens eine weitere Suszeptorelement angebracht ist. Dadurch kann unterbunden werden, dass über den Verbindungsbereich zwischen dem Hauptabschnitt und dem Rippenelement Wärmeenergie aus dem Hauptabschnitt in das Rippenelement strömt und in diesem Bereich der Hauptabschnitt weniger stark aufgeheizt wird.

Für eine thermisch gute Ankopplung ist es bevorzugt, wenn das wenigstens eine Suszeptorelement im Bereich seines Mittelpunktes über ein Befestigungselement mit dem Werkzeugteile verbunden ist. Alternativ kann auch eine stoffschlüssige Verbindung wie beispielsweise eine Schweiß- oder Lötverbindung mit dem Werkzeugteil vorgesehen sein. In weiter bevorzugter Weise ist zusätzlich zwischen dem Suszeptorelement und dem Werkzeugteil ein verformbares Wärmeleitmittel wie beispielsweise Wärmeleitpaste vorgesehen.

Schließlich kann in einer bevorzugten Ausführungsform das Werkzeugsystem eine Vielzahl von Suszeptorelementen aufweisen, die wiederum ein ferromagnetisches Material aufweisen, das eine erste Curie-Temperatur aufweist, die der Zieltemperatur entspricht, wobei die Vielzahl von Suszeptorelementen an einem Oberflächenabschnitt des Werkzeugteils angeordnet sind, wobei die Vielzahl von Suszeptorelementen benachbart zueinander an dem Oberflächenabschnitt angebracht sind, und wobei zwischen den Suszeptorelementen der Vielzahl von Suszeptorelementen Spalte vorgesehen sind. Bei einem derartigen Aufbau kann ein großflächiger Abschnitt der Oberfläche des Werkzeugteils mit Suszeptorelementen versehen werden. Dies ermöglicht wiederum, dass über einen großen Bereich Wärme in das Werkzeugteil eingetragen werden kann, wobei die Spalte zwischen den einzelnen Suszeptorelementen verhindern, dass die thermische Ausdehnung der Suszeptorelemente nahe der Curie-Temperatur zu Problemen führt.

Im Folgenden wird die vorliegende Erfindung anhand einer bevorzugte Ausführungsbeispiele zeigenden Zeichnung erläutert, wobei
- Figur 1: ein erstes Ausführungsbeispiel eines erfindungsgemäßen Werkzeugsystems in einer schematischen Darstellung zeigt,
- Figur 2: ein zweites Ausführungsbeispiel eines erfindungsgemäßen Werkzeugsystems in einer schematischen Darstellung zeigt und
- Figur 3: ein Ausführungsbeispiel einer Anordnung von Suszeptorelementen in Draufsicht und in einer Querschnittsansicht für ein erfindungsgemäßes Werkzeugsystem zeigt.

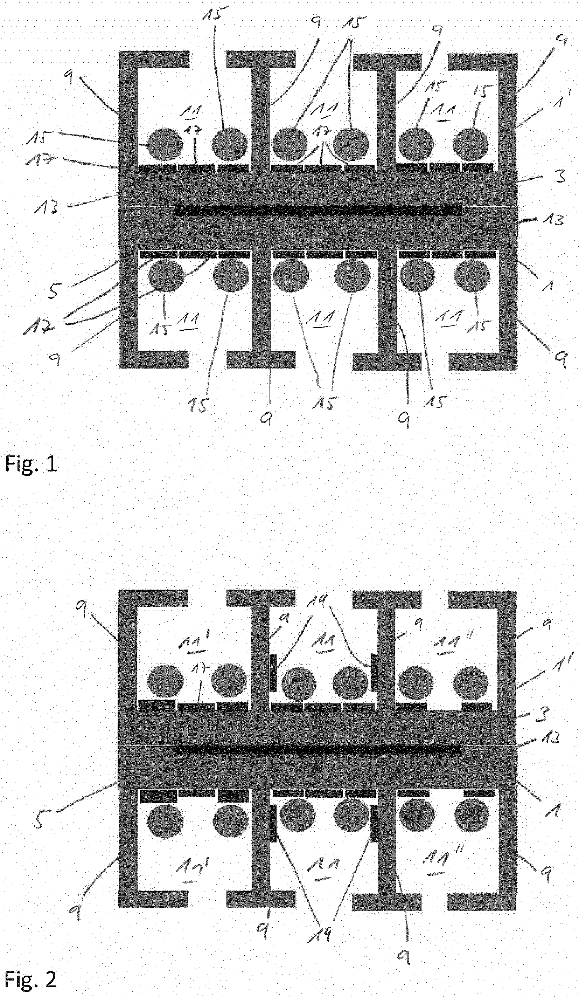

Figur 1 zeigt ein Ausführungsbeispiel eines erfindungsgemäßen Werkzeugsystems in einer schematischen Querschnittsansicht, wobei zu erkennen ist, dass das Werkzeugsystem zwei Werkzeugteile 1, 1' aufweist, wobei in dem ersten Werkzeugteil 1 eine Aufnahmeaussparung 3 vorgesehen ist, die dazu ausgebildet ist, ein in den Figuren nicht dargestelltes Kunststofffaserbauteil aufzunehmen, das mit dem Werkzeugsystem von einer Ausgangstemperatur T1 auf eine Zieltemperatur T2 erwärmt wird, um dieses Kunststofffaser Bauteil bzw. deren Kunststoffmatrixmaterial auszuhärten.

Wie weiter der Figur 1 zu entnehmen ist, weist die Aussparung 3 einen Aufnahmeoberflächenabschnitt 5 auf, durch den die Aufnahmeaussparung 3 begrenzt wird und an dem ein in der Aufnahmeaussparung 3 aufgenommenes Kunststofffaserbauteil anliegt, wenn es mittels des Werkzeugsystems aufgeheizt wird. Das zweite Werkzeugteil 1' liegt während des Aufheizvorgangs der Aufnahmeaussparung 3 gegenüber und insbesondere an der Seite an dem Kunststofffaserbauteil an, die von dem Aufnahmeoberflächenabschnitt 5 wegweist.

Wie weiter Figur 1 zu entnehmen ist, weist das erste Werkzeugteil 1 einen Hauptabschnitt 7 auf, in dem die Aufnahmeaussparung 3 ausgebildet ist. Von dem Hauptabschnitt 7 erstrecken sich Rippenelemente 9 weg. Die Rippenelemente 9 sind an Oberflächenabschnitten des Hauptabschnitts 7 vorgesehen, die außerhalb des Aufnahmeoberflächenabschnitts 5 liegen und insbesondere von der Aufnahmeaussparung 3 entfernt sind. In dem hier dargestellten Ausführungsbeispiel sind die Rippenelement 9 an einem Oberflächenbereich des Hauptabschnitts 7 vorgesehen, der der Oberfläche des Hauptabschnitts 7 gegenüberliegt, an dem das zweite Werkzeugteil 1' anliegt. Die Rippenelemente 9 dienen u.a. dazu, mit ihren freien Enden eine Standfläche sowie eine Anlagefläche für eine Presse zu bilden, über die das Werkzeugteil 1 während des Aushärteprozesses zugehalten wird. Weiter ist Figur 1 zu entnehmen, dass zwischen den Rippenelemente 9 Freiräume 11 ausgebildet sind, die von den Rippenelement 9 sowie einer Oberfläche 13 des Hauptabschnitts 7 begrenzt werden.

Das zweite Werkzeugteil 1' ist ganz ähnlich dem ersten Werkzeugteil 1 ausgebildet und weist ebenfalls sich von dem Hauptabschnitt 7 erstreckende Rippenelemente 9 auf, die ebenfalls Freiräume 11 zwischen sich ausbilden, die wiederum von den Rippenelement 9 sowie einer Oberfläche 13 des Hauptabschnitts 7 begrenzt werden.

In den hier beschriebenen Ausführungsbeispiel sind die Werkzeugteile 1, 1' aus einem metallischen paramagnetischen Material gebildet. Das Material der Werkzeugteile 1, 1' ist dabei derart gewählt, dass die Werkzeugteile 1, 1' bei Temperaturen in dem Bereich zwischen der Ausgangstemperatur T1 und der Zieltemperatur T2 jedenfalls in der Ebene der größten Abmessung der Aufnahmeaussparung 3 einen thermischen Längenausdehnungskoeffizienten haben, der kleiner als 1ox10⁻⁶ K⁻¹, vorzugsweise kleiner als 5x10⁻⁶ K⁻¹ und weiter bevorzugt kleiner als 4x10⁻⁶ K⁻¹ ist. Vorzugsweise gilt diese Anforderung an den Längenausdehnungskoeffizienten für alle Erstreckungsrichtungen der Aufnahmeaussparung 3.

Es ist aber auch denkbar, dass das Material der Werkzeugteile 1, 1' aus einem metallischen ferromagnetischen Material gebildet ist, wobei die Curie-Temperatur des metallischen ferromagnetischen Materials oberhalb der Zieltemperatur T₁ liegt. Es sind allerdings auch andere Materialien denkbar.

In jedem Fall weist das Material der Werkzeugteile 1, 1' aber die zuvor genannte geringe thermische Ausdehnung in dem genannten Temperaturbereich auf, sodass das Material der Werkzeugteile 1, 1' thermisch formstabil ist.

In den Freiräumen 11 des ersten und des zweiten Werkzeugteils 1, 1' sind Induktionseinrichtungen 15 angebracht, die in den hier dargestellten Ausführungsbeispiel Kupferlitzen in den Figuren nicht dargestellte Versorgungseinrichtungen für Wechselstrom aufweisen, sodass von den Kupferlitzen ein elektromagnetisches Wechselfeld erzeugt wird.

Darüber hinaus sind in den Freiräumen 11 neben den Induktionseinrichtungen 15 Suszeptorelement 17 vorgesehen, die an einer Oberfläche des Hauptabschnitts 7 angebracht sind, die von dem Aufnahmeoberflächenabschnitt 5 entfernt ist und die zudem von der Aufnahmeaussparung 3 ebenfalls beabstandet ist. Die Suszeptorelemente 17 sind dabei in dem Bereich angeordnet, der von den Induktionseinrichtungen 15 mit einem elektromagnetischen Wechselfeld beaufschlagt werden.

Die Suszeptorelemente 17 sind aus einem ferromagnetischen Material aufgebaut, dass eine erste Curie-Temperatur aufweist, die der Zieltemperatur entspricht, auf die die Kunststofffaserelemente in der Aufnahmeaussparung 3 des ersten Werkzeugteils 1 aufgeheizt werden sollen, um diese auszuhärten. Dabei können die Suszeptorelemente 17 einstückig aus derartigem Material aufgebaut sein. Es ist aber auch möglich, dass die Suszeptorelement 17 zusätzlich ein weiteres ferromagnetisches Material aufweisen, das eine zweite Curie-Temperatur aufweist, die unterhalb der ersten Curie-Temperatur liegt. In diesem Fall lässt sich, wie bereits beschrieben, der Temperaturanstieg, der bei den Suszeptorelementen 17 stattfindet, wenn sie mit dem elektromagnetischen Wechselfeld aus der Induktionseinrichtung 15 beaufschlagt werden, so steuern, dass er mit zunehmender Temperatur dann abnimmt, wenn die zweite Curie-Temperatur erreicht bzw. überschritten ist.

Zusätzlich ist es möglich, dass die Suszeptorelemente 17 ein Material mit hoher thermischer Leitfähigkeit wie beispielsweise Kupfer, aufweisen. Damit wird erreicht, dass die in den Suszeptorelementen 17 durch die Wechselwirkung mit dem elektromagnetischen Feld erzeugte Wärmeenergie effizient an die Werkzeugteile 1, 1' geleitet werden kann. Insbesondere wenn die Suszeptorelemente 17 aus mehreren Materialien gebildet sind, können Partikel aus ferromagnetischem Material zusammen mit einem Matrix-Material vorgesehen sein, wobei das Matrix-Material ein thermoplastisches Material sein kann, das eine Schmelztemperatur hat, die oberhalb der ersten Curie-Temperatur liegt.

Zum Befestigen der Suszeptorelemente 17 können diese im Bereich ihres Mittelpunkts über ein Befestigungselement mit dem Werkzeugteil 1, 1' verbunden sein. Es ist aber auch möglich, dass die Suszeptorelemente 17 im Bereich ihres Mittelpunkts über eine stoffschlüssige Verbindung, wie eine Schweiß- oder Lötverbindung mit dem Werkzeugteil 1, 1' verbunden sind. In diesen Fällen kann zu Verbesserung der Wärmeleitung zwischen den Suszeptorelementen 17 und dem jeweiligen Werkzeugteil 1, 1' zwischen dem Suszeptorelement 17 und dem Werkzeugteil 1, 1' eine verformbares Wärmeleitmittel vorgesehen sein.

Das erste Ausführungsbeispiel eines Werkzeugsystems arbeitet in der Weise, dass mithilfe der Induktionseinrichtungen 15 die Suszeptorelemente 17 aufgeheizt werden, sodass dann die thermische Energie an die Werkzeugteile 1, 1' mit der Aufnahmeaussparung 3 übertragen wird. Dadurch, dass das Werkzeugteil 1 mit den darin vorgesehenen Aufnahmeaussparung 3 aus einem thermisch formstabilen Material gebildet ist, kann es nicht dazu kommen, dass das in der Aufnahmeaussparung 3 vorgesehene Kunststofffaserbauteil beim Aufheizen oder beim Abkühlen Druckkräften ausgesetzt ist und es Schaden nehmen kann.

Ferner verhindern die Suszeptorelemente 17 mit der erfindungsgemäß gewählten Curie-Temperatur, dass die Suszeptorelemente 17 über eine Temperatur hinaus aufgeheizt werden, die der Zieltemperatur T2 für das Kunststofffaserbauteil entspricht, das ausgehärtet werden soll. Daraus ergibt sich wiederum, dass auch die Werkzeugteile 1, 1' selbst nicht über diese Temperatur aufgeheizt werden, und das System ist damit selbst regulierend.

Weiterhin ermöglicht das System, dass die Suszeptorelemente 17 in geeigneter Weise an der Oberfläche der Werkzeugteile 1, 1' außerhalb des Aufnahmeoberflächenabschnitts 5 so angeordnet werden können, dass gerade die Bereiche der Werkzeugteile 1, 1' durch den Kontakt mit den Suszeptorelementen 17 besonders aufgeheizt werden, die in großem Maße thermische Energie wieder an das Kunststofffaserbauteil oder die Umgebung abgeben und ohne zusätzliche Suszeptorelemente 17 nicht die gewünschte Temperatur erreichen würden. Die erfindungsgemäß an der Oberfläche 13 des Werkzeugteile 1, 1' angeordneten Suszeptorelemente 17 ermöglichen somit, den Wärmeenergieeintrag in die Werkzeugteile 1, 1' räumlich zu steuern, in dem Suszeptorelemente 17 an den erforderlichen Bereichen angebracht werden.

Das zweite, in Figur 2 gezeigte Ausführungsbeispiel eines erfindungsgemäßen induktionsbeheizten Werkzeugsystems ist im Wesentlichen identisch zudem aus Figur 1 aufgebaut. Es sind hier beispielhaft Möglichkeiten gezeigt, wie die Suszeptorelemente 17 ausgebildet und angeordnet sein können, um den Wärmenergieeintrag in die Werkzeugteile 1, 1' weiter anzupassen. In einem Teil der Freiräume 11 sind neben den Suszeptorelementen 17, die an einer Oberfläche 13 des Hauptabschnitts 7 angebracht sind, weitere Suszeptorelemente 19 vorgesehen, die an den Rippenelementen 9 befestigt sind, wobei diese weiteren Suszeptorelemente 19 ebenfalls in dem Bereich angeordnet sind, der von den Induktionseinrichtungen 15 beaufschlagt wird. Damit werden die Rippenelemente 9 von diesen weiteren Suszeptorelementen 19 mit thermischer Energie beaufschlagt und dementsprechend aufgeheizt, sodass verhindert wird, dass die Rippenelemente 9 als Kältebrücken wirken.

In weiteren Freiräumen 11' sind die Suszeptorelemente 17 mit unterschiedlicher Dicke an der Oberfläche 13 angebracht, um die Stärke der Einkopplung in die Suszeptorelemente 17 so anzupassen, das der Eintrag der thermischen Energie in die Oberfläche 13 vergleichmäßigt wird, obwohl die Suszeptoren 17 unterschiedliche Abständen zu den Induktionseinrichtungen 15 haben.

Schließlich können in anderen Freiräumen 11" auch Teile der Oberfläche 13 nicht mit Suszeptoren 17 versehen sein, um in diesen Teilen weniger oder keine thermische Energie einzubringen.

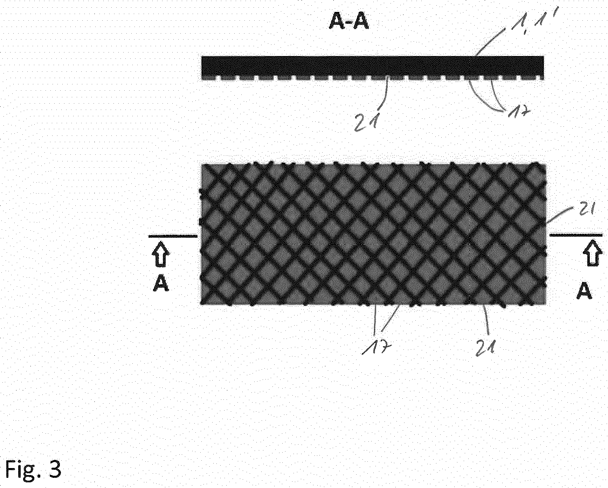

Schließlich ist in Figur 3 eine Anordnung aus Suszeptorelementen 17 für ein Ausführungsbeispiel eines erfindungsgemäßen Werkzeugsystems gezeigt, bei dem eine Vielzahl von Suszeptorelementen 17, die ein ferromagnetischen Material aufweisen, das eine erste Curie-Temperatur aufweist, die der Zieltemperatur entspricht, vorgesehen ist, wobei die Vielzahl von Suszeptorelementen 17 an einem Oberflächenabschnitt des Werkzeugteils 1angeordnet werden können. Die Vielzahl von Suszeptorelementen 17 ist benachbart zueinander an dem Oberflächenabschnitt des Werkzeugteils 1, 1 angebracht sind, wobei zwischen den Suszeptorelementen 17 Spalte 21 vorgesehen sind. Mit dieser Anordnung können auch großflächige Bereich der Oberfläche der Werkzeugteile 1, 1' aufgeheizt werden, wobei die Spalte 21 verhindern, dass es in der Nähe der Zieltemperatur T2 zum Aufbau von Spannungen in der Anordnung kommt.

### Bezugszeichenliste:

- 1, 1': Werkzeugteil
- 3: Aufnahmeaussparung
- 5: Aufnahmeoberflächenabschnitt
- 7: Hauptabschnitt
- 9: Rippenelement
- 11,11',11": Freiraum
- 13: Oberflächeabschnitt - Hauptabschnitt
- 15: Induktionseinrichtung
- 17: Suszeptorelement
- 19: weiteres Suszeptorelement
- 21: Spalt

## Patentansprüche

1. Induktionsbeheiztes Werkzeugsystem zur Aufnahme und zum Aufheizen von Kunststofffaserbauteilen von einer Ausgangstemperatur (T1) auf eine Zieltemperatur (T2),
mit wenigstens einem Werkzeugteil (1, 1'), wobei in dem Werkzeugteil (1, 1') wenigstens eine Aufnahmeaussparung (3) zur Aufnahme eines Kunststofffaserbauteils ausgebildet ist, wobei die Aufnahmeaussparung (3) von einem Aufnahmeoberflächenabschnitt (5) des Werkzeugteils (1, 1') begrenzt ist, sodass ein in der Aufnahmeaussparung (3) aufgenommenes Kunststofffaserbauteil an dem Aufnahmeoberflächenabschnitt (5) anliegen kann,
wobei das Werkzeugteil (1, 1') aus einem thermisch formstabilen Material gebildet ist, sodass das Werkzeugteil (1, 1') bei Temperaturen in dem Bereich zwischen der Ausgangstemperatur (T1) und der Zieltemperatur (T2) in der Ebene der größten Abmessung der Aufnahmeaussparung (3), vorzugsweise in allen Erstreckungsrichtungen der Aufnahmeaussparung (3), einen thermischen Längenausdehnungskoeffizienten hat, der kleiner als 1ox10⁻⁶ K⁻¹, vorzugsweise kleiner als 5x10⁻⁶ K⁻¹ und weiter bevorzugt kleiner als 4x10⁻⁶ K⁻¹ ist,
mit wenigstens einem Suszeptorelement (17), das ein ferromagnetisches Material aufweist, das eine erste Curie-Temperatur aufweist, die der Zieltemperatur (T2) entspricht, wobei das wenigstens eine Suszeptorelement (17) an einem Oberflächenabschnitt (13) des Werkzeugteils (1, 1') angeordnet ist, der außerhalb der Aufnahmeaussparung (3) und des Aufnahmeoberflächenabschnitts (5) liegt, und
mit wenigstens einer Induktionseinrichtung (15), die ausgebildet ist, ein magnetisches Wechselfeld zumindest in dem Bereich zu erzeugen, in dem das wenigstens eine Suszeptorelement (17) angeordnet ist.

2. Induktionsbeheiztes Werkzeugsystem nach Anspruch 1, wobei das wenigstens eine Werkzeugteil (1, 1') aus einem metallischen paramagnetischen Material gebildet ist.

3. Induktionsbeheiztes Werkzeugsystem nach Anspruch 1, wobei das wenigstens eine Werkzeugteil (1, 1') aus einem metallischen ferromagnetischen Material gebildet ist,
wobei die Curie-Temperatur des metallischen ferromagnetischen Materials oberhalb der Zieltemperatur (T1) liegt.

4. Induktionsbeheiztes Werkzeugsystem nach einem oder mehreren der Ansprüche 1 bis 3, wobei das wenigstens eine Suszeptorelement (17) ein weiteres ferromagnetisches Material aufweist, das eine zweite Curie-Temperatur aufweist, die unterhalb der ersten Curie-Temperatur liegt.

5. Induktionsbeheiztes Werkzeugsystem nach einem oder mehreren der Ansprüche 1 bis 4, wobei das wenigstens eine Suszeptorelement (17) ein Material mit hoher thermischer Leitfähigkeit, vorzugsweise Kupfer, aufweist.

6. Induktionsbeheiztes Werkzeugsystem nach einem oder mehreren der Ansprüche 1 bis 5, wobei das wenigstens eine Suszeptorelement (17) aus Partikeln aus ferromagnetischem Material und aus einem Matrix-Material gebildet ist.

7. Induktionsbeheiztes Werkzeugsystem nach Anspruch 6, wobei das Matrix-Material ein thermoplastisches Material ist, das eine Schmelztemperatur hat, die oberhalb der ersten Curie-Temperatur liegt.

8. Induktionsbeheiztes Werkzeugsystem nach einem oder mehreren der Ansprüche 1 bis 7, wobei das wenigstens eine Werkzeugteil (1, 1') einen Hauptabschnitt (7) aufweist, in dem die Aufnahmeaussparung (3) ausgebildet ist,
wobei Rippenelemente (9) vorgesehen sind, die sich von einem Oberflächenabschnitt (13) des Hauptabschnitts (7) weg erstrecken, der außerhalb der Aufnahmeaussparung (3) und des Aufnahmeoberflächenabschnitts (5) liegt,
wobei zwischen den Rippenelementen (9) wenigstens ein Freiraum (11, 11', 11") ausgebildet ist, in dem die Induktionseinrichtung (15) angeordnet ist, und
wobei an dem den Freiraum (11, 11', 11") begrenzenden Abschnitt (13) der Oberfläche des Hauptabschnitts (7) das wenigstens eine Suszeptorelement (17) befestigt ist.

9. Induktionsbeheiztes Werkzeugsystem nach Anspruch 8, wobei wenigstens ein weiteres Suszeptorelement (19) vorgesehen ist, das ein ferromagnetischen Material aufweist, das eine erste Curie-Temperatur aufweist, die der Zieltemperatur (T2) entspricht,
wobei das weitere Suszeptorelement (19) an einer zu dem Freiraum (11, 11', 11") weisenden Oberfläche eines der Rippenelemente (9) vorgesehen ist.

10. Induktionsbeheiztes Werkzeugsystem nach einem oder mehreren der Ansprüche 1 bis 9, wobei das wenigstens eine Suszeptorelement (17) im Bereich seines Mittelpunkts über ein Befestigungselement mit dem Werkzeugteil (1, 1') verbunden ist.

11. Induktionsbeheiztes Werkzeugsystem nach einem oder mehreren der Ansprüche 1 bis 9, wobei das wenigstens eine Suszeptorelement (17) im Bereich seines Mittelpunkts über eine stoffschlüssige Verbindung mit dem Werkzeugteil (1, 1') verbunden ist.

12. Induktionsbeheiztes Werkzeugsystem nach Anspruch 10 oder 11, wobei zwischen dem wenigstens einen Suszeptorelement (17) und dem Werkzeugteil (1, 1') eine verformbares Wärmeleitmittel vorgesehen ist.

13. Induktionsbeheiztes Werkzeugsystem nach einem oder mehreren der Ansprüche 1 bis 12, mit einer Vielzahl von Suszeptorelementen (17), die ein ferromagnetischen Material aufweist, das eine erste Curie-Temperatur aufweist, die der Zieltemperatur (T2) entspricht, wobei die Vielzahl von Suszeptorelementen (17) an einem Oberflächenabschnitt (13) des Werkzeugteils angeordnet sind,
wobei die Vielzahl von Suszeptorelementen (17) benachbart zueinander an dem Oberflächenabschnitt (13) angebracht sind, und
wobei zwischen den Suszeptorelementen (17) der Vielzahl von Suszeptorelementen (17) Spalte (21) vorgesehen sind.

## Claims

1. Induction heated tool system for receiving and for heating polymer-fibre components from a starting temperature (T1) to a target temperature (T2),
having at least one tool part (1, 1'), wherein at least one receiving cutout (3) for receiving a polymer-fibre component is formed in the tool part (1, 1'), wherein the receiving cutout (3) is delimited by a receiving surface portion (5) of the tool part (1, 1'), with the result that a polymer-fibre component received in the receiving cutout (3) can lie against the receiving surface portion (5),
wherein the tool part (1, 1') is formed from a thermally dimensionally stable material so that the tool part (1, 1') has a coefficient of thermal longitudinal expansion which is less than 10x10⁻⁶ K⁻¹, preferably less than 5x10⁻⁶ K⁻¹, and further preferably less than 4x10⁻⁶ K⁻¹, in the plane of the largest dimension of the receiving cutout (3), preferably in all directions of extent of the receiving cutout (3), at temperatures in the range between the starting temperature (T1) and the target temperature (T2),
having at least one susceptor element (17) comprising a ferromagnetic material which has a first Curie temperature corresponding to the target temperature (T2), wherein the at least one susceptor element (17) is arranged on a surface portion (13) of the tool part (1, 1') that lies outside the receiving cutout (3) and the receiving surface portion (5), and
having at least one induction device (15), which is designed to generate an alternating magnetic field at least in the region in which the at least one susceptor element (17) is arranged.

2. Induction heated tool system according to Claim 1, wherein the at least one tool part (1, 1') is formed from a metal paramagnetic material.

3. Induction heated tool system according to Claim 1, wherein the at least one tool part (1, 1') is formed from a metal ferromagnetic material,
wherein the Curie temperature of the metal ferromagnetic material is above the target temperature (T1).

4. Induction heated tool system according to one or more of Claims 1 to 3, wherein the at least one susceptor element (17) comprises a further ferromagnetic material which has a second Curie temperature below the first Curie temperature.

5. Induction heated tool system according to one or more of Claims 1 to 4, wherein the at least one susceptor element (17) comprises a material with high thermal conductivity, preferably copper.

6. Induction heated tool system according to one or more of Claims 1 to 5, wherein the at least one susceptor element (17) is formed from particles of ferromagnetic material and from a matrix material.

7. Induction heated tool system according to Claim 6, wherein the matrix material is a thermoplastic material which has a melting temperature above the first Curie temperature.

8. Induction heated tool system according to one or more of Claims 1 to 7, wherein the at least one tool part (1, 1') has a main portion (7) in which the receiving cutout (3) is made,
wherein rib elements (9) are provided which extend away from a surface portion (13) of the main portion (7) that lies outside the receiving cutout (3) and the receiving surface portion (5),
wherein at least one free space (11, 11', 11''), in which the induction device (15) is arranged, is formed between the rib elements (9), and
wherein the at least one susceptor element (17) is fastened to that portion (13) of the surface of the main portion (7) that delimits the free space (11, 11', 11'').

9. Induction heated tool system according to Claim 8, wherein at least one further susceptor element (19) comprising a ferromagnetic material which has a first Curie temperature corresponding to the target temperature (T2) is provided,
wherein the further susceptor element (19) is provided on a surface of one of the rib elements (9) that faces the free space (11, 11', 11'').

10. Induction heated tool system according to one or more of Claims 1 to 9, wherein the at least one susceptor element (17) is connected in the region of its centre point to the tool part (1, 1') by way of a fastening element.

11. Induction heated tool system according to one or more of Claims 1 to 9, wherein the at least one susceptor element (17) is connected in the region of its centre point to the tool part (1, 1') by way of a material bond.

12. Induction heated tool system according to Claim 10 or 11, wherein a deformable heat conducting means is provided between the at least one susceptor element (17) and the tool part (1, 1').

13. Induction heated tool system according to one or more of Claims 1 to 12, having a multiplicity of susceptor elements (17) comprising a ferromagnetic material which has a first Curie temperature corresponding to the target temperature (T2), wherein the multiplicity of susceptor elements (17) are arranged on a surface portion (13) of the tool part,
wherein the multiplicity of susceptor elements (17) are attached to the surface portion (13) adjacent to one another, and
wherein gaps (21) are provided between the susceptor elements (17) of the multiplicity of susceptor elements (17).

## Revendications

1. Système d'outil chauffé par induction destiné à recevoir et à chauffer des composants en fibres de plastique d'une température initiale (T1) à une température cible (T2),
comprenant au moins une partie d'outil (1, 1'), au moins un évidement de réception (3) destiné à recevoir un composant en fibres de plastique étant formé dans la partie d'outil (1, 1'), l'évidement de réception (3) étant délimité par une portion de surface de réception (5) de la partie d'outil (1, 1'), de sorte qu'un composant en fibres de plastique accueilli dans l'évidement de réception (3) peut reposer contre la portion de surface de réception (5),
la partie d'outil (1, 1') étant formée d'un matériau thermiquement indéformable, de sorte que la partie d'outil (1, 1') possède, à des températures dans la plage entre la température initiale (T1) et la température cible (T2), dans le plan de la plus grande dimension de l'évidement de réception (3), de préférence dans toutes les directions d'extension de l'évidement de réception (3), un coefficient de dilatation thermique longitudinale qui est inférieur à 10x10⁻⁶ K⁻¹, de préférence inférieur à 5x10⁻⁶ K⁻¹ et de préférence encore inférieur à 4x10⁻⁶ K⁻¹,
comprenant au moins un élément suscepteur (17), qui possède un matériau ferromagnétique qui présente une première température de Curie, laquelle correspond à la température cible (T2), l'au moins un élément suscepteur (17) étant disposé au niveau d'une portion de surface (13) de la partie d'outil (1, 1') qui est située à l'extérieur de l'évidement de réception (3) et de la portion de surface de réception (5), et
comprenant au moins un dispositif d'induction (15), lequel est configuré pour générer un champ magnétique alternatif au moins dans la zone dans laquelle est disposé l'au moins un élément suscepteur (17).

2. Système d'outil chauffé par induction selon la revendication 1, l'au moins une partie d'outil (1, 1') étant constituée d'un matériau métallique paramagnétique.

3. Système d'outil chauffé par induction selon la revendication 1, l'au moins une partie d'outil (1, 1') étant constituée d'un matériau métallique ferromagnétique,
la température de Curie du matériau ferromagnétique métallique étant supérieure à la température cible (T1).

4. Système d'outil chauffé par induction selon une ou plusieurs des revendications 1 à 3, l'au moins un élément suscepteur (17) possédant un matériau ferromagnétique supplémentaire, lequel présente une deuxième température de Curie qui est inférieure à la première température de Curie.

5. Système d'outil chauffé par induction selon une ou plusieurs des revendications 1 à 4, l'au moins un élément suscepteur (17) possédant un matériau à conductivité thermique élevée, de préférence du cuivre.

6. Système d'outil chauffé par induction selon une ou plusieurs des revendications 1 à 5, l'au moins un élément suscepteur (17) étant constitué de particules d'un matériau ferromagnétique et d'un matériau matriciel.

7. Système d'outil chauffé par induction selon la revendication 6, le matériau matriciel étant un matériau thermoplastique qui présente une température de fusion qui est supérieure à la première température de Curie.

8. Système d'outil chauffé par induction selon une ou plusieurs des revendications 1 à 7, l'au moins une partie d'outil (1, 1') possédant une portion principale (7) dans laquelle est formé l'évidement de réception (3),
éléments formant nervure (9) étant prévus, lesquels s'étendent à l'écart d'une portion de surface (13) de la portion principale (7) qui se trouve à l'extérieur de l'évidement de réception (3) et de la portion de surface de réception (5),
au moins un espace libre (11, 11', 11") étant formé entre les éléments formant nervure (9), dans lequel est disposé le dispositif d'induction (15), et
l'au moins un élément suscepteur (17) étant fixé à la portion (13) de la surface de la portion principale (7) qui délimite l'espace libre (11, 11', 11").

9. Système d'outil chauffé par induction selon la revendication 8, au moins un élément suscepteur supplémentaire (19) est prévu, lequel possède un matériau ferromagnétique qui présente une première température de Curie qui correspond à la température cible (T2),
l'élément suscepteur supplémentaire (19) étant prévu sur une surface d'un des éléments formant nervure (9) tournée vers l'espace libre (11, 11', 11").

10. Système d'outil chauffé par induction selon une ou plusieurs des revendications 1 à 9, l'au moins un élément suscepteur (17) étant relié à la partie d'outil (1, 1') dans la zone de son centre par l'intermédiaire d'un élément de fixation.

11. Système d'outil chauffé par induction selon une ou plusieurs des revendications 1 à 9, l'au moins un élément suscepteur (17) étant relié à la partie d'outil (1, 1') dans la zone de son centre par l'intermédiaire d'une liaison par fusion de matières.

12. Système d'outil chauffé par induction selon la revendication 10 ou 11, un moyen thermoconducteur déformable étant prévu entre l'au moins un élément suscepteur (17) et la partie d'outil (1, 1').

13. Système d'outil chauffé par induction selon une ou plusieurs des revendications 1 à 12, comprenant une pluralité d'éléments suscepteurs (17) qui possèdent un matériau ferromagnétique qui présente une première température de Curie, laquelle correspond à la température cible (T2), la pluralité d'éléments suscepteurs (17) étant disposés sur une portion de surface (13) de la partie d'outil,
la pluralité d'éléments suscepteurs (17) étant disposés de manière adjacente les uns aux autres sur la portion de surface (13), et
des interstices (21) étant prévus entre les éléments suscepteurs (17) de la pluralité d'éléments suscepteurs (17).
